# FASCICULE DE BREVET EUROPEEN

(11) **EP 1 995 472 B1**
(45) Date de publication et mention de la délivrance du brevet: **25.11.2009**
(21) Numéro de dépôt: 08008567.3
(22) Date de dépôt: 07.05.2008
(51) Int. Cl.: F15B 20/00

(54) **Distributeur hydraulique muni d'un dispositif de détection de grippage**
Mit einer Verschleißwarnungsvorrichtung ausgestatteter Hydraulikverteiler
Hydraulic dispenser equipped with a device for detecting seizures

(30) Priorité: 24.05.2007 FR 0703672
(43) Date de publication de la demande: 26.11.2008
(73) Titulaire: EUROCOPTER, 13725 Marignane Cédex (FR)
(72) Inventeur: Sequera, Damien, 30900 Nimes (FR); Schwaller, Vincent, 13700 Marignane (FR)
(74) Mandataire: GPI & Associés

(56) Documents cités:
- WO-A-2006/088488
- GB-A- 2 155 213
- US-A- 3 529 514
- US-A- 4 335 745
- US-A1- 2005 132 877

## Description

La présente invention concerne un distributeur hydraulique, notamment d'une servocommande d'aéronef, muni d'un dispositif de détection de grippage, cet aéronef étant par exemple un giravion et notamment un hélicoptère.

Plus particulièrement, un hélicoptère est muni d'un rotor principal assurant sa sustentation et sa propulsion. Pour diriger l'hélicoptère, un pilote modifie le pas des pales du rotor principal, c'est-à-dire leur incidence par rapport à l'écoulement d'air incident.

Par suite, le giravion comporte un plateau cyclique pourvu d'un plateau inférieur non tournant et d'un plateau supérieur tournant. Le plateau inférieur non tournant est relié aux commandes de vol du pilote, généralement par trois lignes de commande distinctes alors que le plateau supérieur tournant est relié à chaque pale respectivement par une bielle.

Le plateau cyclique est ainsi un plateau de commande qui coulisse verticalement le long du mât du rotor principal tout en oscillant dans tous les sens autour d'une rotule.

Les oscillations et le déplacement vertical du plateau cyclique, commandés par le pilote, sont à l'origine de la variation du pas des pales permettant au pilote de diriger l'hélicoptère.

Classiquement, le pilote commande le plateau cyclique via des commandes mécaniques liées à ce plateau cyclique par des bielles. Toutefois, les efforts à exercer par le pilote pour manoeuvrer le plateau cyclique sont très importants.

Par conséquent, une servocommande est alors agencée sur chaque ligne de commandes. Le pilote sollicite alors les servocommandes sans efforts particuliers, puis ces servocommandes retranscrivent l'ordre du pilote et agissent sur le plateau cyclique qui ajuste ensuite le pas des pales de la manière requise.

De même, un hélicoptère est pourvu d'un rotor arrière dont le pas des pales peut être modifiable via une servocommande.

Bien entendu, il en va de même pour des ailerons d'avions, par exemple, manoeuvrés via des servocommandes.

On note que certains aéronefs modernes comportent des commandes électriques qui remplacent les liaisons mécaniques reliant les commandes de vol aux servocommandes.

De façon usuelle, les servocommandes comportent au moins un corps externe entourant un piston, le déplacement du piston par rapport au corps étant commandé par un distributeur hydraulique actionné par les commandes de vol du pilote de l'hélicoptère.

Deux modes de réalisations coexistent alors.

Selon un premier mode de réalisation, le piston est agencé sur un point fixe de l'hélicoptère, le corps se déplaçant pour agir sur le plateau cyclique. L'homme du métier dénomme ce type de servocommande, « servocommande à corps mobile ».

A contrario, selon un deuxième mode de réalisation, le corps est solidarisé à un point fixe de l'hélicoptère, le piston se déplaçant alors pour agir sur le plateau cyclique. L'homme du métier dénomme donc ce type de servocommande, « servocommande à piston mobile ».

En outre, quel que soit le mode de réalisation, on trouve des servocommandes dénommées à « simple corps » ou à « double corps » par l'homme du métier.

Une servocommande à simple corps est alors munie d'un corps définissant une chambre de rétraction et une chambre d'extension séparée par un piston. La chambre de rétraction et la chambre d'extension sont alors alimentées par un seul distributeur hydraulique.

Cette servocommande remplit parfaitement sa fonction. Néanmoins, pour des raisons de sécurité, l'homme du métier tend, à partir d'un certain niveau d'efforts, à utiliser une servocommande à double corps.

Une servocommande à double corps comporte alors un corps inférieur et un corps supérieur qui entourent un piston. Ce piston délimite dans chaque corps, une chambre de rétraction et une chambre d'extension.

De plus, deux distributeurs hydrauliques distincts, actionnés par un levier d'entrée commun relié aux commandes du pilote, alimentent respectivement les chambres de rétraction et d'extension des corps inférieur et supérieur.

On comprend aisément que l'homme du métier exige une fiabilité sans faille pour les servocommandes, ce qui semble normal, le dysfonctionnement d'une servocommande étant considéré en général comme catastrophique d'un point de vue sécuritaire.

La redondance des corps permet donc de répondre au problème de sécurité. Néanmoins, il est aussi impératif que chaque distributeur hydraulique actionnant chacun des corps de la servocommande soit parfaitement sécurisé.

On connaît par le document FR 2460435 un premier distributeur hydraulique ayant des moyens de distribution rotatifs.

Ce distributeur hydraulique comporte un moyen de distribution principal cylindrique, dénommé « boisseau », monté rotativement dans une fourrure fixe.

De plus, un moyen de distribution de secours cylindrique est agencé entre la fourrure et le moyen de distribution principal.

La fourrure comporte des alésages pour alimenter en fluide sous pression les chambres de rétraction et d'extension de manière à provoquer un déplacement du corps.

En outre, le boisseau est muni de passages à ouverture progressive agencés sur sa périphérie pour assurer la circulation du fluide hydraulique d'un alésage à l'autre de la fourrure quand le boisseau est mis en rotation par une commande manuelle.

De même, le moyen de distribution de secours est percé d'ouvertures radiales pour autoriser le passage de fluide d'un alésage de la fourrure à l'autre si le moyen de distribution de secours est mis en rotation.

En fonctionnement normal, le moyen de distribution principal n'est pas apte à mettre en rotation le moyen de distribution de secours. Toutefois, en cas de grippage du moyen de distribution principal, ce dernier entraîne en rotation par friction le moyen de distribution de secours ce qui autorise la circulation de fluide d'un alésage de la fourrure à l'autre.

Par conséquent, le distributeur hydraulique fonctionne correctement même en cas de grippage.

Néanmoins, dans une telle situation, il convient de prévenir le pilote de l'aéronef que le fonctionnement de la servocommande n'est pas optimal. Elle est alors équipée d'un dispositif de détection de grippage.

Lors de sa rotation, le moyen de distribution de secours met axialement en mouvement trois billes qui déplacent un levier via un plateau. Ce levier met à son tour en mouvement une tige activant un contacteur qui déclenche une alarme. Pour des questions d'étanchéité, cette tige est munie d'un joint d'étanchéité dynamique séparant le contacteur du système hydraulique du distributeur hydraulique, le joint étant dit dynamique dans la mesure où il réalise l'étanchéité sur une pièce mobile.

Ce dispositif de détection est efficace. Cependant, la présence notamment du joint dynamique est problématique car il est difficile et coûteux d'obtenir une bonne fiabilité à long terme d'une telle étanchéité dynamique.

Le joint dynamique est alors parfois à l'origine de fuites hydrauliques néfastes, nécessitant un démontage de la servocommande pour réparation. Or, cette opération est coûteuse, notamment en terme d'heures de maintenance et d'immobilisation de l'aéronef.

Par ailleurs, on connaît une deuxième servocommande ayant un deuxième distributeur hydraulique muni de moyens de distribution principal et de secours, sensiblement cylindriques, à déplacement non plus rotatif mais axial, dénommés respectivement « tiroir principal » et « tiroir de secours » par l'homme du métier.

Le moyen de distribution principal se déplace alors selon son propre axe de symétrie pour autoriser le passage de fluide hydraulique d'un alésage à l'autre de la fourrure.

En cas de grippage, le moyen de distribution principal déplace, selon ledit axe de symétrie, le moyen de distribution de secours qui autorise alors ledit passage de fluide hydraulique.

Ce deuxième distributeur hydraulique est équipé d'un dispositif de détection de grippage.

Une tige perpendiculaire au dit axe de symétrie est solidarisée à une extrémité du moyen de distribution de secours. Cette première tige est munie d'un joint dynamique séparant le dispositif de détection de grippage du système hydraulique du deuxième distributeur hydraulique.

Sous l'effet de la translation du moyen de distribution de secours, la tige met en rotation une pluralité de leviers qui activent alors un contacteur électrique pour déclencher une alarme.

Comme précédemment, ce deuxième distributeur hydraulique à tiroirs donne satisfaction mais les problèmes liés à des fuites hydrauliques au niveau du joint dynamique subsistent, comme par exemple, dans le dispositif du document US 2005/32877.

La présente invention a donc pour objet de proposer un distributeur hydraulique d'une servocommande muni d'un dispositif de détection et de signalisation de grippage totalement étanche et ne risquant pas de fuir à moyen terme.

Selon l'invention, un distributeur hydraulique d'une servocommande d'un aéronef comporte un moyen de distribution principal et un moyen de distribution de secours coaxiaux, le moyen de distribution de secours étant mis en mouvement par le moyen de distribution principal en cas de grippage de ce moyen de distribution principal. De plus, le distributeur hydraulique est muni d'un dispositif de détection de grippage pour répondre à une exigence de sécurité.

Ce distributeur hydraulique est remarquable en ce que le dispositif de détection est pourvu d'un capteur à ampoule et d'un moyen d'amplification du mouvement du moyen de distribution de secours, le moyen d'amplification comportant un levier ayant une extrémité libre aimantée qui active le capteur à ampoule lors du mouvement du moyen de distribution de secours.

Plus précisément, un capteur à ampoule est un interrupteur électrique commandé par un champ magnétique. Il est pourvu d'une lame principale et de deux lames secondaires agencées dans une ampoule. La lame principale est normalement en contact avec une première lame secondaire mais bascule sous l'effet d'un champ magnétique pour venir en contact avec la deuxième lame secondaire.

Un tel capteur à ampoule est dénommé « interrupteur reed » ou encore « reed switch », voire même « ampoule ILS » par l'homme du métier.

On note que l'utilisation d'un capteur à ampoule est particulièrement surprenante dans le cas présent. En effet, le déplacement du moyen de distribution de secours est très faible, de l'ordre de 0.2 millimètre, ce qui ne semble pas correspondre à la plage de détection d'un capteur à ampoule qui requiert un déplacement d'au minimum un millimètre. Le capteur à ampoule est donc plutôt utilisé pour des déplacements plus importants, dans le cadre d'un contacteur de fin de course par exemple.

Le préjugé vaincu par l'invention permet cependant d'utiliser un tel capteur à ampoule dans le dispositif de détection de grippage.

Du fait de la présence de l'ampoule, le dispositif de détection de grippage peut alors baigner dans le fluide hydraulique du distributeur hydraulique. Il n'est donc plus nécessaire d'utiliser un joint dynamique pour séparer le dispositif de détection du fluide hydraulique ce qui limite considérablement le risque de fuite.

Pour que l'équipage de l'aéronef puisse savoir que le moyen de distribution principal d'une servocommande est grippé, le dispositif de détection comporte un moyen d'alerte agencé dans le cockpit de l'aéronef, le capteur à ampoule commandant donc le moyen d'alerte lorsqu'il est activé par l'extrémité libre aimantée, et plus précisément par un aimant agencé dans cette extrémité libre aimantée.

En cas de grippage, le moyen de distribution principal est solidarisé au moyen de distribution de secours qui est alors mis en mouvement. Ce moyen de distribution de secours déplace alors l'extrémité libre aimantée du levier du dispositif de grippage. Par suite, le champ magnétique créé par l'aimant de l'extrémité libre aimantée du levier entraîne un basculement de la lame principale du capteur à ampoule ce qui active le moyen d'alerte, une alarme sonore ou visuelle par exemple.

L'utilisation d'un levier permet d'amplifier le mouvement du moyen de distribution de secours afin de le rendre détectable par le capteur à ampoule.

Selon un mode de réalisation, le levier a une première surface au moins partiellement en contact avec le moyen de distribution de secours.

En outre, le moyen d'amplification peut comporter un ressort de rappel en contact avec une deuxième surface du levier, la deuxième surface étant opposée à la première surface du levier en contact avec le moyen de distribution de secours.

Avantageusement, le moyen de distribution principal ayant une partie extrémale qui saille du moyen de distribution de secours, le levier a une forme de U pour contourner cette partie extrémale.

Par ailleurs, selon une première variante, le moyen d'amplification comporte avantageusement un écran magnétique entourant l'extrémité libre aimantée du levier pour focaliser le champ magnétique créé par l'extrémité libre aimantée vers le capteur à ampoule. Cela permet de s'assurer que le faible déplacement du moyen de distribution de secours, et du levier, sera bien détecté par le capteur à ampoule.

De même, selon une deuxième variante, le moyen d'amplification comporte au moins une lentille magnétique pour focaliser le champ magnétique créé par l'extrémité libre aimantée vers le capteur à ampoule.

La ou les lentilles magnétiques, agencées entre le capteur à ampoule et l'aimant de l'extrémité libre aimantée du levier, sont alors constituées d'un cylindre en un matériau à très haute perméabilité magnétique en comparaison avec les autres matériaux environnants.

De façon optimale, la ou les lentilles magnétiques sont dirigées vers le capteur à ampoule et sont perpendiculaires à un axe longitudinal du capteur à ampoule.

Les première et deuxième variantes peuvent être combinées pour maximiser la focalisation du champ magnétique créé par l'extrémité libre aimantée.

Enfin, en plus d'un carter principal encerclant les moyens de distribution principal et de secours, le dispositif de détection comporte un carter secondaire venant obturer le carter principal, un joint statique étant disposé entre le carter principal et le carter secondaire.

L'étanchéité étant usuellement parfaite avec un joint statique, à savoir un joint assurant l'étanchéité entre deux pièces mécaniques fixes, les risques de fuite sont infimes voire nuls, même dans le long terme. De plus, les coûts de fabrication et de maintenance sont réduits en mettant en oeuvre un joint statique.

Par ailleurs, le carter secondaire comporte un moyen de soutènement, traversé par le capteur à ampoule, sur lequel est articulé le levier afin que ce dernier puisse effectuer une rotation lorsque le moyen de distribution de secours se déplace.

L'invention et ses avantages apparaîtront avec plus de détails dans le cadre de la description qui suit avec des exemples de réalisation donnés à titre illustratif en référence aux figures annexées qui représentent :
- la figure 1, une coupe d'une servocommande pourvue d'un distributeur hydraulique selon l'invention,
- la figure 2, une coupe du dispositif de détection selon un premier plan,
- la figure 3, une coupe du dispositif de détection selon un deuxième plan, et
- la figure 4, une coupe radiale du dispositif de détection.

Les éléments présents dans plusieurs figures distinctes sont affectés d'une seule et même référence.

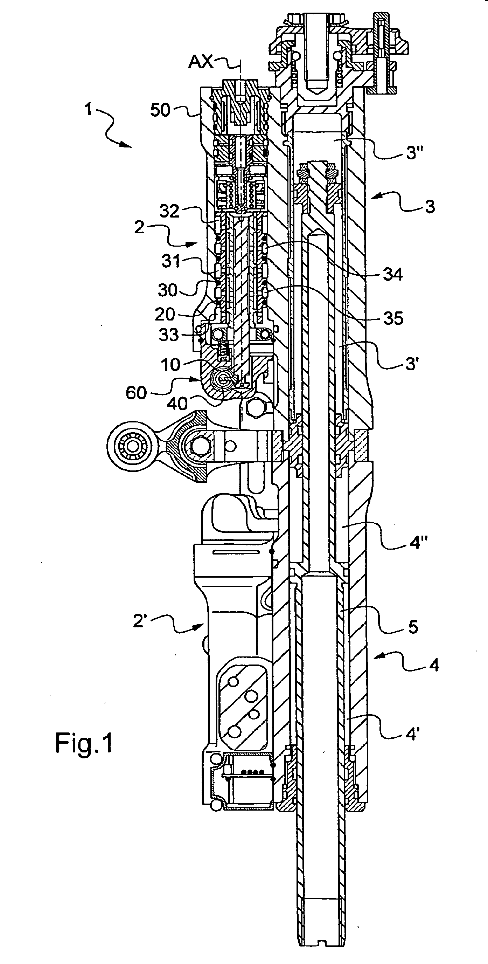

La figure 1 présente une coupe d'une servocommande 1 pourvue d'un distributeur hydraulique 2 selon l'invention.

Cette servocommande 1 est à double corps et à double distribution. En effet, elle comporte un corps supérieur 3 et un corps inférieur 4 entourant un piston 5 qui est solidarisé à un aéronef.

Ce piston 5 définit dans chaque corps supérieur 3 et inférieur 4 une chambre de rétraction 3", 4" et une chambre d'extension 3', 4'.

Par ailleurs, chaque corps supérieur 3 et inférieur 4 est équipé d'un distributeur hydraulique 2, 2'. Ces distributeurs hydrauliques permettent de faire varier la pression dans les chambres de rétraction 3", 4" et d'extension 3', 4' pour déplacer les deux corps supérieur 3 et inférieur 4 par rapport au piston 5.

Par conséquent, le distributeur hydraulique 2 du corps supérieur 3 comporte un moyen de distribution principal 10 ainsi qu'un moyen de distribution de secours 20, sensiblement cylindriques et coaxiaux.

Ces moyens de distribution principal 10 et de secours 20 s'étendent selon un axe vertical AX qui représente aussi leur propre axe de symétrie.

De plus, les moyens de distribution principal 10 et de secours 20 sont agencés à l'intérieur d'une fourrure 30, l'ensemble étant entouré par un carter principal 50.

La fourrure 30 comprend notamment cinq perçages 31, 32, 33, 34, 35. Le premier perçage 31 constitue une arrivée de fluide hydraulique sous pression, de l'huile par exemple.

Les quatrième et cinquième perçages 34, 35 représentent des sorties respectivement reliées, par des tuyauteries non représentées, aux chambres de rétraction 3" et d'extension 3' du corps supérieur 3.

Enfin, les deuxième et troisième perçages 32, 33 représentent des orifices de retour du fluide hydraulique.

Par ailleurs, les moyens de distribution principal 10 et de secours 20 comportent des passages pour permettre la circulation de fluide d'un perçage du fourreau à l'autre.

La servocommande 1 est commandée par le biais d'un organe 40, activé par un pilote par exemple, via une chaîne mécanique non représentée sur les figures.

Lorsque le pilote requiert une rétraction de la servocommande 1, l'organe 40 agit sur le moyen de distribution principal 10 qui se déplace longitudinalement vers le haut.

De part son déplacement longitudinal, selon l'axe vertical AX, le moyen de distribution principal 10 met en communication le premier perçage 31 avec le cinquième perçage 35. Du fluide hydraulique sous pression est ainsi envoyé vers la chambre de rétraction 3". La pression dans cette dernière augmente ce qui induit un mouvement de translation du corps de la servocommande vers le bas, par rapport au piston 5.

Par suite, le fluide contenu dans la chambre d'extension 3' s'échappe par le quatrième perçage 34 et se dirige vers le deuxième perçage 32 afin d'être réinjecté dans le circuit.

A contrario, lorsque le pilote requiert une extension de la servocommande 1, l'organe 40 agit sur le moyen de distribution principal 10 qui se déplace longitudinalement vers le bas.

De part son déplacement longitudinal, selon l'axe vertical AX, le moyen de distribution principal 10 met en communication le premier perçage 31 avec le quatrième perçage 34. Du fluide hydraulique sous pression est ainsi envoyé vers la chambre d'extension 3'. La pression dans cette dernière augmente ce qui induit un mouvement de translation du corps de la servocommande vers le haut, par rapport au piston 5.

Par suite, le fluide contenu dans la chambre de rétraction 3" s'échappe par le cinquième perçage 35 et se dirige vers le troisième perçage 33 afin d'être réinjecté dans le circuit.

On comprend, évidemment, que le distributeur hydraulique du deuxième corps 4 fonctionne de façon identique simultanément au distributeur hydraulique du premier corps 3.

En cas de grippage, c'est-à-dire lorsque le moyen de distribution principal tend à se bloquer, le moyen de distribution principal 10 entraîne dans son mouvement de translation le moyen de distribution de secours 20. Ce dernier met alors en relation les perçages adéquats de la fourrure 30 et compense ainsi la déficience du moyen de distribution principal 10.

Afin de détecter un tel grippage, chaque distributeur hydraulique 2 est muni d'un dispositif de détection de grippage 60.

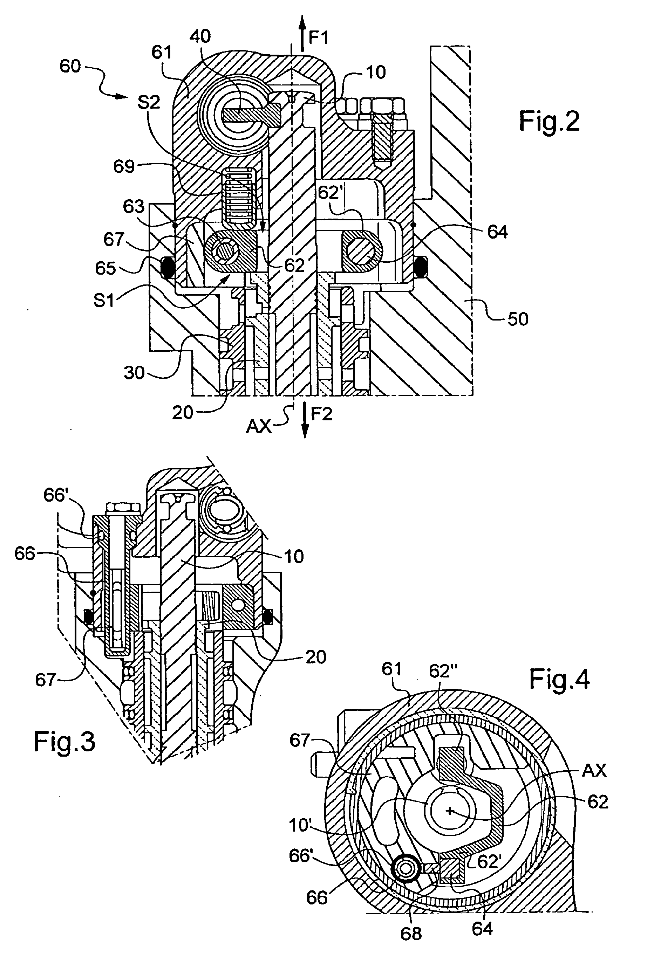

Les figures 2 et 3 présentent des coupes longitudinales du dispositif de détection 60 selon un premier et un deuxième plans présentant une angulation entre eux.

Le dispositif de détection comporte un carter secondaire 61 obturant le carter principal 50 qui entoure partiellement le moyen de distribution principal 10, le moyen de distribution de secours 20 et la fourrure 30.

Un joint statique 65 est alors agencé entre le carter principal 50 et le carter secondaire 61 ce qui garantit une bonne étanchéité à l'interface du carter principal 50 et du carter secondaire 61.

De plus, le carter secondaire 61 du dispositif de détection est pourvu d'un moyen de soutènement 67. En référence à la figure 2, un capteur à ampoule 66 traverse le carter secondaire 61 et le moyen de soutènement 67, un joint statique 66' étant disposé entre le carter secondaire 61 et le capteur à ampoule 66.

L'étanchéité est donc réalisée uniquement à l'aide de joints statiques 66', 65 ce qui constitue un avantage certain par rapport aux dispositifs de l'art antérieur.

En outre, le dispositif de détection est muni d'un moyen d'amplification du mouvement du moyen de distribution de secours 20, en cas de grippage du moyen de distribution principal 10.

Ce moyen d'amplification comporte un levier 62 dont une extrémité articulée est fixée au moyen de soutènement 67 par une articulation 63 permettant à l'extrémité libre aimantée 62' du levier d'effectuer un déplacement rotatif.

Afin d'être aimantée, l'extrémité libre aimantée 62' du levier possède un aimant 64 apte à générer un champ magnétique.

Par ailleurs, le levier 62 a une première surface S1 en contact avec le moyen de distribution de secours 20.

En référence à la figure 2, lorsque le moyen de distribution principal est grippé, s'il se déplace selon la flèche F1, il induit un mouvement du moyen de distribution de secours selon cette flèche F1.

Ce moyen de distribution de secours se déplace alors sur une très courte distance, entre 0.2 et 0.5 millimètre par exemple.

Le levier 62 étant en contact avec le moyen de distribution de secours 20, le mouvement du moyen de distribution de secours 20 entraîne une rotation du levier 62 autour de l'articulation 63, dans le sens senestrorsum, le moyen de distribution de secours 20 poussant le levier 62.

Le mouvement du moyen de distribution de secours 20 est ainsi amplifié dans la mesure où un faible déplacement linéaire au niveau de la surface de contact S1 du levier 62 correspond à un déplacement linéaire plus important de son extrémité libre aimantée 62', un facteur quatre existant par exemple entre ces déplacements linéaires.

Le champ magnétique généré par l'extrémité libre aimantée 62' est alors déplacé ce qui permet d'activer le capteur à ampoule 66.

Avantageusement, le capteur à ampoule envoie alors un signal à un moyen d'alerte du dispositif de détection, agencé dans le cockpit de l'aéronef, pour le commander et déclencher une alarme sonore ou visuelle.

En référence à la figure 2, lorsque le moyen de distribution principal est grippé, s'il se déplace selon la flèche F2, il induit un mouvement du moyen de distribution de secours selon cette flèche F2.

Le moyen d'amplification comporte alors un ressort de rappel 69 en contact avec une deuxième surface S2 du levier, opposée à la première surface S1.

Le moyen de distribution de secours 20 reste alors en contact avec le levier 62 sous l'action du ressort de rappel 69, ce qui permet au levier 62 de suivre le déplacement du moyen de distribution de secours 20.

En effet, lorsque le moyen de distribution de secours 20 réalise son mouvement de translation vers le bas, le ressort de rappel 69 appuie sur le levier 62 et tend à se détendre. Il pousse ainsi le levier 62 qui réalise une rotation autour de l'articulation 63, dans le sens dextrorsum sur la figure 2.

Le champ magnétique généré par l'extrémité libre aimantée 62' est alors déplacé ce qui permet d'activer le capteur à ampoule 66 et donc le moyen d'alerte agencé dans le cockpit.

La figure 4 présente une coupe du dispositif de détection 60.

Le dispositif de détection 60 comporte un carter secondaire 61, un moyen de soutènement 67 étant solidarisé à ce carter secondaire 61.

De plus, le dispositif est muni d'un capteur à ampoule 66 qui traverse longitudinalement, à savoir selon l'axe vertical AX, le carter secondaire 61 et le moyen de soutènement 67.

Le moyen d'amplification du dispositif de détection est notamment pourvu d'un levier 62 dont une extrémité articulée 62" est fixée au moyen de soutènement 67 par une articulation, cette articulation autorisant un mouvement rotatif au levier 62.

Par ailleurs, le moyen de distribution principal 10 a une partie extrémale 10' qui saille du moyen de distribution de secours 20 pour être commandé par un organe 40, représenté sur les figures 1 et 2, activé par le pilote de l'aéronef.

Cette partie extrémale est alors agencée à l'intérieur du carter secondaire 61 du dispositif de détection de grippage.

Afin de contourner cette partie extrémale, le levier 62 a sensiblement une forme de U.

En outre, selon une première variante, le moyen d'amplification comporte avantageusement un écran magnétique, non représenté sur les figures, qui entoure l'extrémité libre aimantée 62' du levier 62.

L'écran magnétique, de forme cylindrique par exemple, focalise le champ magnétique vers le capteur à ampoule 66. Ainsi, si le déplacement du levier 62 n'est pas suffisant pour permettre l'activation du capteur à ampoule, cette activation sera néanmoins possible grâce à la focalisation réalisée.

De même, selon une deuxième variante, le moyen d'amplification comporte une ou plusieurs lentilles magnétiques 68 agencées entre l'extrémité libre aimantée 62' et le capteur à ampoule 66 en étant fixées sur le moyen de soutènement 67.

Ces lentilles magnétiques 68 sont dirigées vers le capteur à ampoule 66 et sont perpendiculaires à l'axe longitudinal 66' de ce capteur à ampoule.

Les lentilles magnétiques permettent alors de focaliser le champ magnétique généré par l'extrémité libre aimantée 62' vers le capteur à ampoule 66.

On note que le moyen de distribution principal 10, et donc le moyen de distribution de secours 20, sont aptes à se déplacer selon deux directions opposées. Ainsi, le moyen d'amplification comporte avantageusement deux lentilles magnétiques 68, une lentille magnétique étant prévue en cas de mouvement du moyen de distribution de secours dans une direction, et une autre lentille magnétique étant prévue en cas de mouvement du moyen de distribution de secours selon l'autre direction.

Naturellement, la présente invention est sujette à de nombreuses variations quant à sa mise en oeuvre. Bien que plusieurs variantes aient été décrites, on comprend bien qu'il n'est pas concevable d'identifier de manière exhaustive tous les modes possibles. II est bien sûr envisageable de remplacer un moyen décrit par un moyen équivalent sans sortir du cadre de la présente invention.

## Revendications

1. Distributeur hydraulique (2) d'une servocommande (1) d'un aéronef comportant un moyen de distribution principal (10) et un moyen de distribution de secours (20) coaxiaux, ledit moyen de distribution de secours (20) étant mis en mouvement par ledit moyen de distribution principal (10) en cas de grippage de ce moyen de distribution principal (10), ledit distributeur hydraulique étant muni d'un dispositif de détection (60) dudit grippage,
**caractérisé en ce que** ledit dispositif de détection (60) est pourvu d'un capteur à ampoule (66) et d'un moyen d'amplification (62, 69, 68) dudit mouvement du moyen de distribution de secours, ledit moyen d'amplification comportant un levier (62) ayant une extrémité libre aimantée (62') qui active ledit capteur à ampoule (66) lors dudit mouvement du moyen de distribution de secours (20).

2. Distributeur hydraulique selon la revendication 1,
**caractérisé en ce que** ledit dispositif de détection (60) comporte un moyen d'alerte agencé dans un cockpit dudit aéronef, ledit capteur à ampoule (66) commandant ledit moyen d'alerte lorsqu'il est activé par ladite extrémité libre aimantée (62').

3. Distributeur hydraulique selon l'une quelconque des revendications précédentes,
**caractérisé en ce que** ledit levier (62) a une première surface (S1) au moins partiellement en contact avec ledit moyen de distribution de secours (20).

4. Distributeur hydraulique selon l'une quelconque des revendications précédentes,
**caractérisé en ce que** ledit moyen d'amplification comporte un ressort de rappel (69) en contact avec une deuxième surface (S2) dudit levier (62), ladite deuxième surface (S2) étant opposée à une première surface (S1) dudit levier (62) en contact avec ledit moyen de distribution de secours (20).

5. Distributeur hydraulique selon l'une quelconque des revendications précédentes,
**caractérisé en ce que**, ledit moyen de distribution principal (10) ayant une partie extrémale (10') qui saille dudit moyen de distribution de secours (20), ledit levier (62) à une forme de U pour contourner ladite partie extrémale (10').

6. Distributeur hydraulique selon l'une quelconque des revendications précédentes,
**caractérisé en ce que** ledit moyen d'amplification comporte un écran magnétique entourant ladite extrémité libre aimantée (62') dudit levier (62) pour focaliser le champ magnétique créé par l'extrémité libre aimantée (62') vers ledit capteur à ampoule (66).

7. Distributeur hydraulique selon l'une quelconque des revendications précédentes,
**caractérisé en ce que** ledit moyen d'amplification comporte au moins une lentille magnétique (68) agencée entre ladite extrémité libre aimantée (62') dudit levier (62) et ledit capteur à ampoule (66) pour focaliser le champ magnétique créé par l'extrémité libre aimantée (62') vers ledit capteur à ampoule (66).

8. Distributeur hydraulique selon la revendication 7,
**caractérisé en ce que** ladite au moins une lentille magnétique (68) est dirigée vers ledit capteur à ampoule (66) et est perpendiculaires à un axe longitudinal dudit capteur à ampoule (66)..

9. Distributeur hydraulique selon l'une quelconque des revendications précédentes,
**caractérisé en ce qu'**un carter principal (50) encerclant les moyens de distribution principal (10) et de secours (20), ledit dispositif de détection (60) comporte un carter secondaire (61) venant obturer ledit carter principal (50), un joint statique (65) étant disposé entre ledit carter principal (50) et ledit carter secondaire (61).

10. Distributeur hydraulique selon la revendication 9,
**caractérisé en ce que** ledit carter secondaire (61) comporte un moyen de soutènement (67), traversé par ledit capteur à ampoule (66), sur lequel est articulé ledit levier (62).

11. Distributeur hydraulique selon l'une quelconque des revendications précédentes,
**caractérisé en ce que** ladite extrémité libre aimantée (62') comporte un aimant (64).

## Claims

1. A hydraulic distributor (2) of a servocontrol (1) of an aircraft, comprising a main distribution means (10) and a co-axial emergency distribution means (20), said emergency distribution means (20) being set into movement by said main distribution means (10) in the event of seizure of this main distribution means (10), said hydraulic distributor being fitted with a device (60) for detection of said seizure, **characterised in that** said detection device (60) is provided with a bulb sensor (66) and a means (62, 69, 68) for amplification of said movement of the emergency distribution means, said amplification means comprising a lever (62) having a magnetised free end (62') which activates said bulb sensor (66) at the time of said movement of the emergency distribution means (20).

2. A hydraulic distributor according to claim 1, **characterised in that** said detection device (60) comprises a warning means arranged in a cockpit of said aircraft, said bulb sensor (66) actuating said warning means when it is activated by said magnetised free end (62').

3. A hydraulic distributor according to either one of the preceding claims, **characterised in that** said lever (62) has a first surface (S1) which is at least partly in contact with said emergency distribution means (20).

4. A hydraulic distributor according to any one of the preceding claims, **characterised in that** said amplification means comprises a return spring (69) which is in contact with a second surface (S2) of said lever (62), said second surface (S2) lying opposite a first surface (S1) of said lever (62) that is in contact with said emergency distribution means (20).

5. A hydraulic distributor according to any one of the preceding claims, **characterised in that** said main distribution means (10) has an end part (10') projecting beyond said emergency distribution means (20), and said lever (62) is U-shaped in order to extend around said end part (10').

6. A hydraulic distributor according to any one of the preceding claims, **characterised in that** said amplification means comprises a magnetic shield surrounding said magnetised free end (62') of said lever (62) in order to focus the magnetic field created by the magnetised free end (62') towards said bulb sensor (66).

7. A hydraulic distributor according to any one of the preceding claims, **characterised in that** said amplification means comprises at least one magnetic lens (68) arranged between said magnetised free end (62') of said lever (62) and said bulb sensor (66) in order to focus the magnetic field created by the magnetised free end (62') towards said bulb sensor (66).

8. A hydraulic distributor according to claim 7, **characterised in that** said at least one magnetic lens (68) is directed towards said bulb sensor (66) and is perpendicular to a longitudinal axis of said bulb sensor (66).

9. A hydraulic distributor according to any one of the preceding claims, **characterised in that** a main housing (50) surrounds the main (10) and emergency distribution means (20), and said detection device (60) comprises a secondary housing (61) sealing said main housing (50), a static seal (65) being disposed between said main housing (50) and said secondary housing (61).

10. A hydraulic distributor according to claim 9, **characterised in that** said secondary housing (61) comprises a supporting means (67), through which said bulb sensor (66) passes and on which said lever (62) is articulated.

11. A hydraulic distributor according to any one of the preceding claims, **characterised in that** said magnetised free end (62') comprises a magnet (64).

## Patentansprüche

1. Hydraulikverteiler (2) einer Servosteuerung (1) eines Luftfahrzeugs, der koaxial eine Hauptverteilungseinrichtung (10) und eine Notverteilungseinrichtung (20) aufweist, wobei die Notverteilungseinrichtung (20) von der Hauptverteilungseinrichtung (10) im Fall eines Festfressens dieser Hauptverteilungseinrichtung (10) in Bewegung versetzt wird, wobei der Hydraulikverteiler mit einer Vorrichtung zur Erfassung (60) des Festfressens versehen ist,
**dadurch gekennzeichnet, dass** die Erfassungsvorrichtung (60) mit einem Kapsel-Sensor (66) und mit einer Einrichtung (62, 69, 68) zur Verstärkung der Bewegung der Notverteilungseinrichtung ausgestattet ist, wobei die Verstärkungseinrichtung einen Hebel (62) mit einem freien magnetisierten Ende (62') aufweist, das den Kapsel-Sensor (66) bei der Bewegung der Notverteilungseinrichtung (20) aktiviert.

2. Hydraulikverteiler nach Anspruch 1, **dadurch gekennzeichnet, dass** die Erfassungsvorrichtung (60) eine Alarmeinrichtung aufweist, die in einem Cockpit des Luftfahrzeugs angeordnet ist, wobei der Kapsel-Sensor (66) die Warneinrichtung steuert, wenn er vom freien magnetisierten Ende (62') aktiviert wird.

3. Hydraulikverteiler nach einem der vorhergehenden Ansprüche, **dadurch gekennzeichnet, dass** der Hebel (62) eine erste Fläche (S1) zumindest teilweise in Kontakt mit der Notverteilungseinrichtung (20) hat.

4. Hydraulikverteiler nach einem der vorhergehenden Ansprüche, **dadurch gekennzeichnet, dass** die Verstärkungseinrichtung eine Rückstellfeder (69) in Kontakt mit einer zweiten Fläche (S2) des Hebels (62) hat, wobei die zweite Fläche (S2) entgegengesetzt zu einer ersten Fläche (S1) des Hebels (62) in Kontakt mit der Notverteilungseinrichtung (20) liegt.

5. Hydraulikverteiler nach einem der vorhergehenden Ansprüche, **dadurch gekennzeichnet, dass**, da ein Endbereich (10') der Hauptverteilungseinrichtung (10) aus der Notverteilungseinrichtung (20) vorsteht, der Hebel (62) eine U-Form hat, um den Endbereich (10') zu umgehen.

6. Hydraulikverteiler nach einem der vorhergehenden Ansprüche, **dadurch gekennzeichnet, dass** die Verstärkungseinrichtung einen Magnetschirm aufweist, der das freie magnetisierte Ende (62') des Hebels (62) umgibt, um das vom freien magnetisierten Ende (62') erzeugte Magnetfeld zum Kapsel-Sensor (66) zu fokussieren.

7. Hydraulikverteiler nach einem der vorhergehenden Ansprüche, **dadurch gekennzeichnet, dass** die Verstärkungseinrichtung mindestens eine magnetische Linse (68) aufweist, die zwischen dem freien magnetisierten Ende (62') des Hebels (62) und dem Kapsel-Sensor (66) angeordnet ist, um das vom freien magnetisierten Ende (62') erzeugte Magnetfeld zum Kapsel-Sensor (66) zu fokussieren.

8. Hydraulikverteiler nach Anspruch 7, **dadurch gekennzeichnet, dass** die mindestens eine magnetische Linse (68) zum Kapsel-Sensor (66) gerichtet und lotrecht zu einer Längsachse des Kapsel-Sensors (66) ist.

9. Hydraulikverteiler nach einem der vorhergehenden Ansprüche, **dadurch gekennzeichnet, dass** ein Hauptgehäuse (50) die Haupt-(10) und Notverteilungseinrichtungen (20) umgibt und die Erfassungsvorrichtung (60) ein Sekundärgehäuse (61) aufweist, das das Hauptgehäuse (50) verschließt, wobei eine statische Dichtung (65) zwischen dem Hauptgehäuse (50) und dem Sekundärgehäuse (61) angeordnet ist.

10. Hydraulikverteiler nach Anspruch 9, **dadurch gekennzeichnet, dass** das Sekundärgehäuse (61) eine von dem Kapsel-Sensor (66) durchquerte Stützeinrichtung (67) aufweist, an die der Hebel (62) angelenkt ist.

11. Hydraulikverteiler nach einem der vorhergehenden Ansprüche, **dadurch gekennzeichnet, dass** das freie magnetisierte Ende (62') einen Magnet aufweist (64).
